# EUROPÄISCHE PATENTSCHRIFT

(11) **EP 1 650 004 B1**
(45) Veröffentlichungstag und Bekanntmachung des Hinweises auf die Patenterteilung: **21.12.2011**
(21) Anmeldenummer: 05022210.8
(22) Anmeldetag: 12.10.2005
(51) Int. Cl.: B29C 45/56, B29C 45/76, B29C 45/80

(54) **Verfahren zum Spritzgiessen mit einem Prägeablauf**
Injection molding method with a compression procedure
Procédé de moulage par injection comportant un cycle de compression

(30) Priorität: 20.10.2004 DE 102004051292
(43) Veröffentlichungstag der Anmeldung: 26.04.2006
(73) Patentinhaber: Keinath, Renate, 72336 Balingen (DE)
(72) Erfinder: Hehl, Karl, verstorben (DE)
(74) Vertreter: Reinhardt, Harry

(56) Entgegenhaltungen:
- EP-A1- 0 573 912
- WO-A-02/30651
- WO-A-2004/005006
- JP-A- 9 327 849
- US-A- 5 547 619
- ARBURG: "Selogica - the control unit for all ALLROUNDER injection moulding machines" NPL, Mai 2002 (2002-05), Seiten 1-31, XP002305034
- "GENERATIONENSPRUNG DIE MASCHINENSTEUERUNG CC 200" PLASTVERARBEITER, HUETHIG GMBH, HEIDELBERG, DE, [Online] Bd. 54, Nr. 10, Oktober 2003 (2003-10), Seiten 162-163, XP001154707 ISSN: 0032-1338
- "Bildschirmgrafiken der Maschinensteuerung CC200"[Online] 18. September 2003 (2003-09-18), Seiten 1-5, XP002421216 Gefunden im Internet: URL:http://www.engelglobal.com/at/images/s tories/cc200/2---Einzelbewegung.jpg> [gefunden am 2007-02-16]
- JAEGER A ET AL: "MASCHINENTECHNIK UND PROZESSFUEHRUNG ZUM DEKORHINTERSPRITZEN" KUNSTSTOFFE, CARL HANSER VERLAG, MUNCHEN, DE, Bd. 81, Nr. 10, 1. Oktober 1991 (1991-10-01), Seiten 869-875, XP000297621 ISSN: 0023-5563
- JOHANNABER F ET AL: "Handbuch Spritzgiessen" HANDBUCH SPRITZGIESSEN, XX, XX, November 2001 (2001-11), Seiten 418-426, XP002248792

## Beschreibung

Die Erfindung betrifft ein Verfahren zum Spritzgießen von Spritzteilen auf einer Spritzgießmaschine zum Verarbeiten von Kunststoffen und anderen plastifizierbaren Materialien wie keramische und/oder pulverförmige Massen nach dem Oberbegriff des Anspruchs 1.

Wenn im Rahmen dieser Offenbarung der Begriff Werkzeug benutzt wird, so steht dieser als Synonym für Spritzgießwerkzeug oder Spritzgießform. Kraft und Druck sind in bekannter Weise über die Fläche miteinander korreliert.

Unter Prägen versteht man im Spritzgießen das Ausformen eines Teils im Spritzgießwerkzeug mit Hilfe von nicht Spritzgießeinheit bezogenen Achsen, d.h. die Prägeabläufe werden z.B. mit der beweglichen Hälfte des Spritzgießwerkzeugs selbst, mit einem Ausstoßer oder mit einem Prägestempel (einem sogenannten Kemzug) im Werkzeug als Prägeelement, jedoch nicht mittels der Spritzgießeinheit ausgeführt. Die in Frage kommenden Achsen sollten die Möglichkeit einer Positionsregelung und/oder Kraftregelung besitzen, der Antrieb selbst kann (geregelt-) hydraulisch oder (geregelt-) elektromechanisch ausgeführt sein.

Generell sind separate Prägeprogramme zur Bewegung des Prägeelements z.B. nach einem Kraft/Zeit-Profil gleichzeitig zu- den Zyklusphasen des Einspritzens und/oder des Nachdrucks als sogenanntes Spritzprägen z.B. aus der DE 196 51 879 A1, der DE 10 2004 003 136 A1 oder der WO 02/051615 A1 bekannt, bei der ergänzend beim Spritzprägen ein vorzeitiges Einfrieren des Angusses vermieden werden soll. Bei der DE 102 33 679 A1 wird zusätzlich zum Spritzprägen eine Ausgleichkraft ermittelt, um Kippkräften entgegen zu wirken. Auch eine Bewegung des Prägeelements nach Weg/Zeit-Profilen ist im weiteren Sinne als Prägen bekannt und wird in der Fachwelt meist als Werkzeuglüften oder ähnliches bezeichnet.

Aus der WO 2004/005006 A ist eine Bildschirmeingabe-Maske bekannt, die mit Zahlen gefüllt werden kann. Gemäß Seite 3, Absatz 2 kann der Bediener seinen Spritzzklus erzeugen, wobei allerdings nur eine allgemeine Triggerbedingung für den Start eines Parallelablaufes genannt wird. In den Ausführungsbeispielen sind lediglich verschiedene Startbedingungen für das Prägen mit zugehörigen Sollwerten für Geschwindigkeit und Druck angeführt und zwar als Führungsgrößen in Profilen über der Zeit.

Aus ARBURG: "Selogica - the control unit for all ALLROUNDER injection moulding machines" NPL, Mai 2002 (2002-05), Seiten 1-31, XP002305034 ist es bekannt, effizient den Start von gleichzeitigen Prägeabläufen zu programmieren und zu parametrieren. Beschrieben wird ein spezieller Prägeablauf eines Kraftprägens gleichzeitig zum Einspritzen, jedoch ohne stetige Anschlussbedingung zum Istpunkt des Werkzeugs.

Aus der Veröffentlichung "GENERATIONENSPRUNG DIE MASCHINENSTEUERUNG CC 200" PLASTVERARBEITER, HUETHIG GMBH, HEIDELBERG, DE, [Online] Bd. 54, Nr. 10, Oktober 2003 (2003-10), Seiten 162-163, XP001154707 ISSN: 0032-1338 - ist eine weitere Ablaufprogrammierung bekannt. Die Parametrierung der einzelnen Abläufe mit Drücken und Geschwindigkeiten kann mittels grafischer Eingabe in Kurvendiagrammen erfolgen, die durch Eingabesollwertgrafiken gebildet sind.

Die US 5,547,619 A beschreibt einen Rampenverlauf zwischen verschiedenen Sollwertstützpunkten für ein Verfahren, um an einer Kniehebelmaschine einen gewünschten Sollwertverlauf an der beweglichen Platte durch Transformation auf die Kniehebelantriebsplatte zu erreichen.

Der prozesstechnische Vorteil der verschiedenen Prägeprogramme liegt meist in einem spannungsarmen Spritzgießen von flächigen Teilen oder auch bei vernetzenden und quellenden Formassen darin, dass durch das Atmen der Formhälften ein zu großer Überdruck in der Kavität vermieden werden kann. Die Problematik bei den heute angewendeten Verfahren ist jedoch zum einen, dass keine Kombinationen der verschiedenen Prägeprogramme universell möglich sind, und zum anderen die vorhandenen Kombinationen (z.B. Prägen und Entlüften beim Silikonspritzgießen) sehr spezielle Parameter- und Ablaufkonfigurationen haben, die dann in anderen Anwendungen nicht mehr verwendbar sind.

In allen im Stand der Technik bekannten Prägeverfahren wird immer nur von einem zu erreichenden Zielwert für Kraft oder Weg der Prägeachse gesprochen, von welchem Standpunkt aus und wie zu diesem Zielwert zu gelangen ist, wird in der Maschinensteuerung produktspezifisch irgendwie in Abhängigkeit der vorhandenen Dynamik der Antriebsachse realisiert, ohne dass der Anwender hierauf Einfluss nehmen kann. Dies beeinträchtigt die Reproduzierbarkeit eines Spritzzyklus und damit die Qualität der Spritzteile nachteilig.

Ausgehend von diesem Stand der Technik liegt der vorliegenden Erfindung die Aufgabe zu Grunde, ein Verfahren zum Prägen von Spritzteilen zur Verfügung zu stellen, dass eine kontinuierliche Qualität der Spritzteile von Zyklus zu Zyklus ermöglicht.

Diese Aufgabe wird durch ein Verfahren mit den Merkmalen des Anspruches 1 gelöst.

Um zu einem vorhersagbaren Verhalten des Prägeablaufs in seiner Auswirkung auf das Teil zu gelangen, wird eine freie Programmierbarkeit des Prägeablaufs im Rahmen des Spritzzyklus parallel oder seriell zu den weiteren Schritten des Spritzzyklus gewährleistet. Als universelle Anschlussbedingung wird ausgehend vom Ist-Zustand der betroffenen Achsparameter Kraft oder Weg am Beginn eines Prägeablaufs eine vorgegebene Rampe definiert mit dem verbindenden Rampenparameter Zeit.

Dadurch werden unter anderem die Voraussetzungen für eine freie Kombinierbarkeit des Kraftprägeverfahrens mit dem Positionsprägeverfahren geschaffen. Dies macht die heute bekannten und realisierten Spezialfälle dem Anwender in einer übersichtlichen, logischen und einfach zu konfigurierenden Ablaufsteuerung zugänglich, ohne immer wieder einzelne Spezialverfahren zu benötigen. Weiterhin erhält man durch die freie Kombinierbarkeit auch neue Prozessschritte. So kann man z.B. mit einem Kraft-Weg Profil eine Kavität gleichmäßig füllen und danach die Teildicke durch Rückdrücken des noch flüssigen Kunststoffes in die Spritzgießeinheit als eine absolut definierte Teiledicke (bei einem flächig in der Werkzeugtrennung liegenden Teil) wegabhängig einstellen und somit z.B. Ungenauigkeiten ausgleichen, die von der Rückstromsperre während des Dosierens und des anschließenden Einspritzens erzeugt werden.

Weitere Vorteile ergeben sich aus den Unteransprüchen und der folgenden Beschreibung.

Im Folgenden wird die Erfindung an Hand von in den Zeichnungen dargestellten Ausführungsbeispielen näher erläutert. Es zeigen :
- Fig. 1: eine schematische Darstellung einer Kunststoff-Spritzgießmaschine in Seitenansicht,
- Fig. 2: einen mit Symbolen dargestellten Prozessablauf eines Weg-Kraft Prägens gleichzeitig zum Einspritzprozess mit Triggerbedingung Schneckenweg,
- Fig. 3: einen mit Symbolen dargestellten Prozessablauf eines Kraft-Weg Prägens gleichzeitig zum Einspritzprozess mit Triggerbedingung Start-Einspritzen und Endbedingung nach Nachdruck,
- Fig. 4: einen mit Symbolen dargestellten Prozessablauf eines Weg-Kraft Prägeprofils mit Werkzeugweg abhängigem Starttrigger für den Einspritzprozess ("fliegendes" Spritzen mit Prägeablauf),
- Fig. 5: einen mit Symbolen dargestellten Prozessablauf eines sequentiellen Weg- und Kraftprägens mit eingeschachteltem Spritzprozess (Prägen und Lüften bei Verarbeitung von vernetzenden Materialien wie LSR und Duroplasten)
- Fig. 6: ein Ablaufdiagramm der Kraft F und des Wegs s über der Zeit bei einem mit mehreren Prägeabläufen versehenen Spritzzyklus.

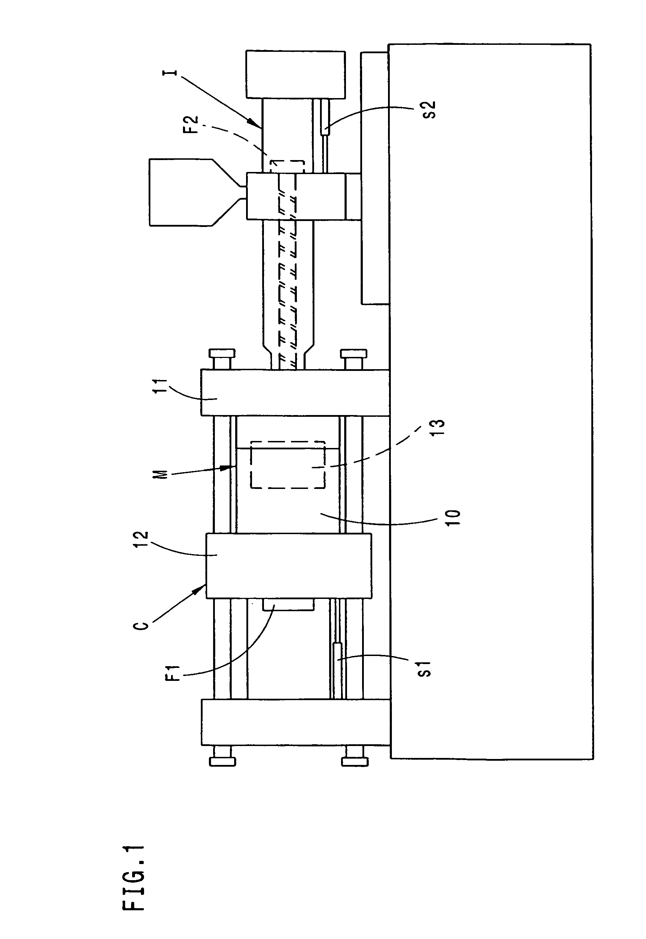

Fig. 1 zeigt den üblichen Aufbau einer Spritzgießmaschine zum Verarbeiten von Kunststoffen und anderer plastifizierbarer Materialien wie keramische und/oder pulverförmige Massen. Mittels der Spritzgießmaschine wird Material plastifiziert, dass von einer Spritzgießeinheit I in ein in einer Formschließeinheit C aufgenommenes Spritzgießwerkzeug eingespritzt wird, dass einen dem zu fertigenden Spritzteil entsprechenden Formhohlraum 13 aufweist. Die Formschließeinheit C besitzt üblicherweise einen stationären Formträger 11 und einen beweglichen Formträger 12, der von der Formschließeinheit F zyklisch unter Öffnen und Schließen der Spritzgießform M auf den stationären Formträger 11 zu und von diesem weg bewegt wird. Das in den Formhohlraum eingespritzte Material wird dort abgekühlt, bis das Spritzteil entnommen werden kann.

Ein Teil des Zyklusablaufs ist ein Prägeablauf. Unter Prägen versteht man im Spritzgießen das Ausformen eines Teils im Spritzgießwerkzeug mit Hilfe von nicht Spritzgießeinheit bezogenen Achsen, d.h. die Prägeabläufe werden z.B. mit einem beweglichen Formteil 10, d.h. üblicherweise mit der beweglichen Werkzeughälfte des Spritzgießwerkzeugs selbst - also über den beweglichen Formträger 12 -, mit einem Ausstoßer oder mit einem Prägestempel F1 (einem sogenannten Kernzug) im Werkzeug als Prägeelement, jedoch nicht mittels der Spritzgießeinheit ausgeführt. Die damit in Frage kommenden Bewegungsachsen sollten die Möglichkeit einer Positionsregelung und/oder Kraftregelung besitzen, der Antrieb selbst kann (geregelt-) hydraulisch oder (geregelt-) elektromechanisch ausgeführt sein.

Für das Prägen mit dem beweglichen Formteil 10 gibt es insbesondere zwei unterschiedliche Prägeverfahren, nämlich das Prägen über Kraftprofil oder das Prägen über Wegprofil. Für die Erstellung des Ablaufs durch den Bediener bekommt jedes Verfahren ein eigenes Ablaufsymbol. Diese zwei Prägeverfahren können "beliebig" in den Maschinenablauf eingefügt werden und wiederholt werden.

Das Verfahren umfasst wenigstens die Schritte:
- Einspritzen eines plastifizierten Materials als Massepolster in einen zwischen Formteilen 10 der Spritzgießform M gebildeten Formhohlraum 13,
- Aufbringen wenigstens eines geregelten, nicht von der Spritzgießeinheit I aufgebrachten Prägedrucks und/oder Prägewegs auf das Massepolster mittels wenigstens eines Prägeelements,
- Entnehmen oder Ausstoßen des Spritzteils.

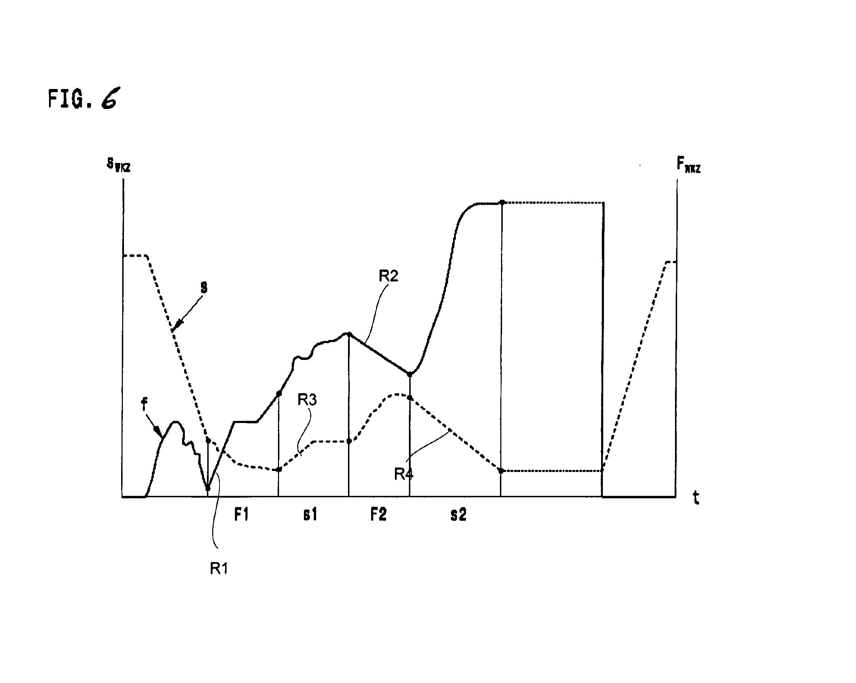

Der Prägeablauf, also das wenigstens einmalige Aufbringen eines Prägedrucks und/oder Prägewegs ist im Zyklusablauf frei programmierbar, d.h. der Prägeablauf kann an einer beliebigen Stelle im Spritzzyklus gleichzeitig, parallel oder seriell zu anderen Schritten programmiert und durchgeführt werden. Als stetige Kraft- und/oder Weganschlussbedingung erfolgt ausgehend vom Istzustand der Kraft und/oder des Wegs des Prägeelements zu Beginn des Prägeschritts ein Übergang mit dem verbindenden Rampenparameter Zeit, wie sich dies z.B. aus den Rampen R1, R2, im Kraftverlauf f und den Rampen R3 und R4 im Weg s in Fig. 6 ergibt. Der wenigstens eine Prägeablauf erfolgt seriell und/oder gleichzeitig zum restlichen Zyklusablauf. Im Zyklusablauf können mehrere, auch verschiedene Prägeabläufe vorgesehen sein. Als Prägeelement kann das bewegliche Formteil der Spritzgießform M, ein Ausstoßer oder ein Prägestempel in der Spritzgießform verwendet werden.

Um zu einem vorhersagbaren Verhalten des Prägeablaufs in seiner Auswirkung auf das Teil zu gelangen, wird als universelle Anschlussbedingung, ausgehend vom Ist-Zustand der betroffenen Parameter an der Bewegungsachse des Prägeelements am Beginn eines Prägeablaufs die Rampe mit dem verbindenden Rampenparameter Zeit definiert. Die Rampenform kann als weiterer Parameter ebenfalls definiert werden (z.B. linear, quadratisch, Sinusquadrat oder irgend eine mathematische Funktionalität über der Zeit als Funktionsparameter, die über Anfangs- (= Ist Startpunkt) und Endpunkt (= Sollwert) in Echtzeit berechnet werden kann. Der Vorteil dieser Vorgehensweise liegt darin, dass sich der Bediener beim Parametrieren zunächst nur um den einzelnen Prozessschritt kümmern muss und er immer davon ausgehen kann, dass eine stetige und kontrollierte Aktion der Maschine erfolgt unabhängig vom sonstigen Zyklusablauf und/oder vom vorherigen Prägeschritt. Die Maschine fährt somit kontrolliert und automatisch ein stetiges Prägeprogramm, ohne dass der Bediener manuell auf die Anschlussbedingungen achten muss.

Die Startbedingung für den einzelnen Prägeablauf ist bei einem seriellen Ablauf das Ende des vorausgegangenen Schritts. Bei einem gleichzeitigen Ablauf kann die Startbedingung der Start eines übergeordneter Ablaufs, ggf. in Verbindung mit einer Weg- oder Kraftbedingung des übergeordneten Ablaufs sein.

Bei einem Prägeablauf über Kraft (Prägen mittels Kraft-Zeit Profil) kann die Prägekraft mit einer Zeitverzögerung nach einem Kraft-Zeit Prägeprofil aufgebracht werden. Es kann ein Begrenzungswert für die Prägegeschwindigkeit ggf. auch stufenweise mit n Stufen vorgegeben werden, wobei bei n=1 mit der Zeit 1 von der Ist-Kraft Werkzeug auf Kraft 1 interpoliert wird und bei n=n mit der Zeit n von der Ist-Kraft Werkzeug auf Kraft n interpoliert wird. Die Kraft wird dann gehalten.

Ähnlich verhält es sich bei einem Prägeablauf über Weg (Prägen mittels Weg-Zeit Profil). Auch hier kann der Weg mit einer Zeitverzögerung nach einem Weg-Zeit Prägeprofil aufgebracht werden. Es kann ein Begrenzungswert für die Prägekraft ggf. auch stufenweise mit n Stufen vorgegeben werden, wobei bei n=1 mit der Zeit 1 von dem Ist-Weg Werkzeug auf Weg 1 interpoliert wird und bei n=n mit der Zeit n von dem Ist-Weg Werkzeug auf Weg n interpoliert wird. Der Weg wird dann gehalten.

Die Endbedingung des Prägeablauf kann sein:
- Erreichen einer Zeit oder Restlaufzeit
- Erreichen eines Wegs oder Sollwegs
- Erreichen einer Kraft oder Sollkraft

Folgt bei seriellem Prägen ein weiterer Prägevorgang wird dieser unter Beibehaltung der Weg/Kraftbedingungen des vorausgegangenen Schritts, also unter Istwertübernahme gestartet. Folgt kein direkter weiterer serieller Prägevorgang wird das Zuhaltekraftprogramm gestartet.

Folgt bei parallelem Prägen ein weiterer Prägevorgang in diesem parallelen Ablaufzweig wird dieser unter Beibehaltung der Weg/Kraftbedingungen des vorausgegangenen Prägeablaufs gestartet. Folgt kein direkter weiterer Prägevorgang in diesem Ablaufzweig kann das Zuhaltekraftprogramm gestartet werden. Die Endsynchronisation mit einem übergeordneten Ablauf erzwingt stets einen rechtzeitigen Abbruch des gleichzeitigen Prägeablaufs und führt die Werkzeugachse in das zugehörige Zuhaltekraftprogramm über.

Das serielle Prägen kann unterbrechend in den Spritzablauf (seriell zu Einspritzen, Nachdruck oder Kühlen) eingefügt werden (bisherige Abläufe Prägen und Lüften). Es kann jedoch auch als eigenständiger Hauptablauf programmiert werden und der Spritzprozess dazu als gleichzeitiger abhängiger Unterablauf mit Startsynchronisation Weg oder Kraft der Prägeachse, worunter bisher "fliegendes Spritzen" verstanden wird, wenn die Prägeachse die Bewegungsachse des beweglichen Formträgers ist.

Beim gleichzeitigen (parallelen) Prägen bildet die Spritzachse (Einspritzen, Nachdruck und Kühlen) die Führungsachse und der Start für den Prägeablauf mit der beweglichen Werkzeughälfte als Prägeachse geht von einer sogenannten Prägeposition aus, die beim Werkzeug schließen zuerst als Ausgangsposition angefahren wird.

Die Anzahl n der Weg/Zeit oder Kraft/Zeit Stufen kann, da die Prägeprogramme bei Bedarf mehrmals hintereinander ablaufen können, z.B. auf n=3 je Prägeablaufsymbol eingeschränkt werden. Sind an einer Maschine mehrere Spritzgießeinheiten vorgesehen, kann der wenigstens eine Prägeablauf je Spritzgießeinheit programmiert werden. Die Abläufe müssen nicht synchronisiert sein, üblicherweise sind die in diesem Fall mehreren Spritzgießeinheiten aber nicht losgelöst voneinander zu betrachten, da sie sich gegenseitig beeinflussen.

Die Kraft (f) kann über Krafterfassungselemente F1, F2 von der Formschließkraft oder dem Werkzeuginnendruck oder von der Spritzgießkraft der Spritzgießeinheit I abgeleitet sein. Der Werkzeuginnendruck kann aber auch als übergeordnete Regelgröße zur Überlagerung der Druck- oder Kraftregelung herangezogen werden, um dadurch die Ergebnisse am Spritzteil weiter zu verbessern. Ebenso werden die Weggrößen durch entsprechende Sensoren s1 und s2 an der Formschließeinheit C und an der Spritzgießeinheit I erfasst und bedarfsweise zur Regelung herangezogen.

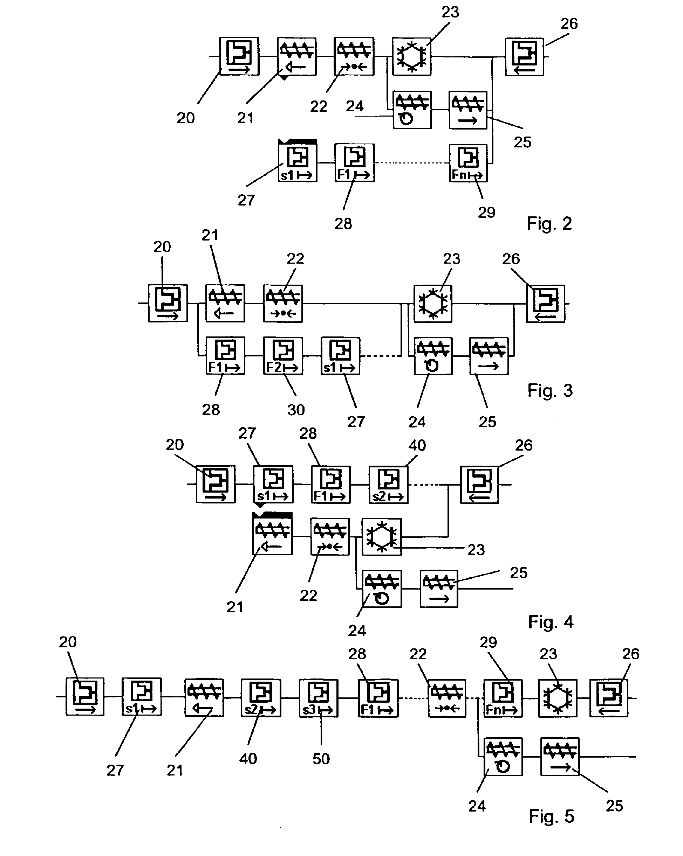

Die Figuren 2 bis 5 zeigen verschiedene Realisierungsmöglichkeiten dargestellt mit Ablaufsymbolen. In den Figuren werden für vergleichbare Schritte grundsätzlich dieselben Bezugszeichen verwendet, sofern Im Folgenden nichts Anderes erwähnt ist.
1.) Weg-Kraft Prägen gleichzeitig zum Einspritzprozess mit Triggerbedingung Schneckenweg (Fig. 2)
   Fig. 2 zeigt mit Ablaufsymbolen einen typischen programmierten Spritzzyklusablauf. Die oberste Linie zeigt die Leitachse, zu der parallel ein Weg-Kraft Prägen gestartet wird. Auf der Leitachse findet zunächst bei Symbol 20 das Werkzeugschließen statt, an das sich das Einspritzen (Symbol 21), der Nachdruck (Symbol 22), das Kühlen der eingespritzten Masse (Symbol 23) sowie das Werkzeugöffnen (Symbol 26) anschließt. Während der Kühlphase wird parallel bereits wieder von der Schnecke oder dem Fördermittel in der Spritzgießeinheit der nächste Schuss dosiert (Symbol 24) und es findet die Dekompression (Symbol 25) statt. Insofern handelt es sich bei diesen beiden Vorgängen, also den Abläufen auf den obersten beiden Linien um einen üblichen Spritzgießvorgang noch ohne Prägeablauf. Allerdings triggert das Einspritzen (Symbol 21) auch das Wegprägen (Symbol 27), was durch den Pfeil am unteren Rand von Symbol 21 und die gegengleich Ergänzung am oberen Rand des Symbols 27 graphisch verdeutlicht ist. Ist ein vorgegebener oder vorgebbarer bestimmter Weg s zurückgelegt, findet ein Übergang auf das Kraftprägen statt, wobei dies über mehrere Stufen erfolgen kann (Symbole 28 für F1 bis Symbol 29 für die n-te Stufe Fn). Dies erfolgt parallel zum Spritzzyklus, wobei das Prägen vor dem Öffnen des Werkzeugs endet. Auf die dabei auftretenden Übergangsbedingungen wird unten im Hinblick auf Fig. 6 noch näher eingegangen.
2.) Kraft-Weg Prägen gleichzeitig zum Einspritzprozess mit Triggerbedingung Start-Einspritzen und Endbedingung nach Nachdruck (Fig. 3)
   Auch in Fig. 3 läuft auf der Leitachse der Spritzzyklus mit den genannten Symbolen 20, 21, 22, 23 und 26, sowie im späteren Teil des Zyklus das parallele Dosieren und Dekomprimieren mit den Symbolen 24 und 25 ab. Allerdings ist die Startbedingung für das parallel zum Spritzzyklus erfolgende Prägen das Einspritzen und die Prägephase endet nach dem Nachdruck (Symbol 22). In diesem Spritzzyklus ist ein Kraft-Weg-Prägen vorgesehen, d.h. zuerst wird mit einer vorgegebenen ersten Kraft (Symbol 28) und dann mit einer zweiten Kraft (Symbol 30) geprägt, bevor ausgehend von dem erreichten Istzustand ein Übergang zu einem Wegprägen stattfindet (Symbol 27).
3.) Weg-Kraft Prägeprofil mit Werkzeugweg abhängigem Starttrigger für den Einspritzprozess ("fliegendes" Spritzen mit Prägeablauf) (Fig. 4)
   Figur 4 zeigt den Prägeprozess auf der Leitachse. Zwischen dem Werkzeugschließen (Symbol 20) und dem Werkzeugschließen (Symbol 26) ist ein Wegprägen (Symbol 27) über einen ersten Weg, ein Kraftprägen (Symbol 28 und ein nochmaliges Wegprägen (Symbol 40) über einen zweiten Weg vorgesehen. In Abhängigkeit eines erreichten Prägewegs bzw. eines vom Werkzeug beim Prägen zurückgelegten Wegs wird das Einspritzen gemäß Symbol 21 getriggert. Der Prägevorgang bestimmt also den Start des Einspritzvorgangs, in dem dann die weiteren Symbole 22, 23, 24 und 25 in der üblichen Reihenfolge vorgesehen sind.
4.) Sequentielles Weg und Kraft Prägen mit eingeschachteltem Spritzprozess (Prägen und Lüften bei Verarbeitung von vernetzenden Materialien wie LSR und Duroplasten) (Fig. 5)
   Fig. 5 zeigt gegenüber den anderen Figuren einen seriellen Ablauf von Prägen oder besser gesagt Prägeschritten und Spritzgießen. Zwischen den Ablaufsymbolen 20 bis 26 sind ein Wegprägen mit drei Stufen bzw. drei Wegen (Symbole 27, 40, 50) und zwei Kraftprägeschritte (Symbole 28, 29) angeordnet.

Die verschiedenen Beispiele verdeutlichen die erreichbare, frei programmierbare Flexibilität, die vom Bediener ganz nach den Anforderungen des jeweiligen Produkts eingegeben werden können.

Fig. 6 zeigt, was mit der Kraft f und dem Weg s verfahrensgemäß bei solchen Abläufen geschieht. Im Diagramm der Fig. 6 links ist das Werkzeug geöffnet und damit die Kraft zunächst Null. Der Weg s verringert sich dann, bis es zu einem ersten Kraftprägen F1 kommt. Die Kraft wird ausgehend vom zu Beginn dieses Schrittes vorhandene Istzustand über die Rampe R1 bis zum gewünschten Wert geführt. Im nächsten Schritt findet ein Wegprägen s1 statt. Um eine lstwertübemahme zu erhalten wird der nach dem Kraftprägen vorhanden Weg als Istzustand über die Rampe R3 zum gewünschten Weg gebracht, wobei sich ein davon abhängiger Kraftverlauf ergibt. Im Schritt des nächsten Kraftprägens F2 dient die nach dem Wegprägen s1 erreichte Kraft wieder als Ausgangswert, der nun auf die vorbestimmte Kraft über die Rampe R2 verringert wird, bis schließlich beim zweiten Wegprägen s2 wieder der Weg nach dem Kraftprägen F2 als Istwert übernommen und über die Rampe R4 zum Zielwert geführt wird. Nach den Prägephasen geht der Kraftverlauf in den Nachdruck über, bevor sich das Werkzeug wieder öffnet, was der Kraftverlauf f und der Wegverlauf s wiedergeben.

Bei jedem Übergang ergibt sich damit eine mindestens stetige Funktion des Wegs und/oder der Kraft. Im Ausführungsbeispiel der Fig. 6 ist dieser Übergang stetig linear, er kann aber auch beliebig differenzierbar und damit auch ruckfrei sein. Diese stetige Anschlussfunktion erleichtert die Kontrolle des Spritzteils. Während der Prägephasen ist also ein Wert, nämlich die Kraft (oder der damit korrelierte Druck) oder der Weg entlang vorgegebener oder vorgebbarer Verläufe programmiert, so dass auch der Einfluss auf das Spritzteil kontrollierbar ist.

## Patentansprüche

1. Verfahren zum Spritzgießen von Spritzteilen auf einer Spritzgießmaschine zum Verarbeiten von Kunststoffen und anderen plastifizierbaren Materialien wie keramische und/oder pulverförmige Massen mit wenigstens einer Spritzgießeinheit (S), wobei das Verfahren die Schritte umfasst:
- Einspritzen eines plastifizierten Materials als Massepolster in einen zwischen Formteilen (10) einer Spritzgießform (M) gebildeten Formhohlraum (13)
- Aufbringen eines geregelten, nicht von der Spritzgießeinheit (I) aufgebrachten Prägedrucks oder Prägewegs auf das Massepolster mittels wenigstens eines Prägeelements, wobei das wenigstens einmalige Aufbringen des Prägedrucks und/oder Prägewegs als Prägeablauf im Zyklusablauf frei programmierbar ist
- Entnehmen oder Ausstoßen des Spritzteils,
**dadurch gekennzeichnet, dass** als stetige Kraft- und/oder Weganschlussbedingung ausgehend vom Istzustand der Kraft (f) und/oder des Wegs (s) des Prägeelements zu Beginn des Prägeschritts ein Übergang zum Sollwert durch eine Rampe mit dem verbindenden Rampenparameter Zeit erfolgt.

2. Verfahren nach Anspruch 1, **dadurch gekennzeichnet, dass** der wenigstens eine Prägeäblauf seriell und/oder gleichzeitig zum restlichen Zyklusablauf erfolgt.

3. Verfahren nach Anspruch 1 oder 2, **dadurch gekennzeichnet, dass** im Zyklusablauf mehrere Prägeabläufe vorgesehen sind.

4. Verfahren nach einem der vorhergehenden Ansprüche, **dadurch gekennzeichnet, dass** als Prägeelement das bewegliche Formteil (10) der Spritzgießform (M), ein Ausstoßer oder ein Prägestempel in der Spritzgießform (M) verwendet wird.

5. Verfahren nach einem der vorhergehenden Ansprüche, **dadurch gekennzeichnet, dass** am Übergang zum Schritt des Aufbringens des Zuhaltedrucks ein rechtzeitiger Abbruch eines gleichzeitigen Prägeablaufs erzwungen wird.

6. Verfahren nach einem der vorhergehenden Ansprüche, **dadurch gekennzeichnet, dass** die Rampenform als eine mathematische Funktionalität über der Zeit als Funktionsparameter und über den dem Istzustand zugeordneten Anfangspunkt und über den dem Sollwert zugeordneten Endpunkt in Echtzeit berechnet wird.

7. Verfahren nach einem der vorhergehenden Ansprüche, **dadurch gekennzeichnet, dass** das serielle Prägen intermittierend in den Zyklusablauf eingefügt wird.

8. Verfahren nach einem der vorhergehenden Ansprüche, **dadurch gekennzeichnet, dass** der Prägeablauf als eigenständiger Hauptablauf und der Spritzgießzyklus als gleichzeitiger abhängiger Unterablauf programmiert wird.

9. Verfahren nach einem der vorhergehenden Ansprüche, **dadurch gekennzeichnet, dass** mehrere Spritzgießeinheiten (I) vorgesehen sind und der wenigstens eine nicht von der Spritzgießeinheit (I) ausgelöste Prägeablauf je Spritzgießeinheit programmierbar ist.

10. Verfahren nach einem der vorhergehenden Ansprüche, **dadurch gekennzeichnet, dass** die Kraft (f) als Funktion des Werkzeuginnendrucks geregelt wird.

## Claims

1. Method of injection moulding injection-moulded articles on an injection moulding machine for processing plastics and other plasticizable materials such as ceramic- and/or powder materials by means of at least one injection moulding unit (S), wherein the method comprises the steps:
- injecting a plasticized material as a melt cushion into a mould cavity (13) formed between mould parts (10) of an injection moulding tool (M)
- applying a controlled embossing pressure or embossing stroke, which is not applied by the injection moulding unit (I), upon the melt cushion by means of at least one embossing element, wherein the at least one application of the embossing pressure and/or embossing stroke is freely programmable as an embossing sequence in the cycle sequence
- removing or ejecting the injection-moulded article,
**characterized in that**, as a constant force- and/or stroke supply condition, starting from the actual state of the force (f) and/or stroke (s) of the embossing element at the beginning of the embossing step a transition to the setpoint value is effected by means of a ramp having the connecting ramp parameter, time.

2. Method according to claim 1, **characterized in that** the at least one embossing sequence is effected in series and/or simultaneously with the remaining cycle sequence.

3. Method according to claim 1 or 2, **characterized in that** in the cycle sequence a plurality of embossing sequences are provided.

4. Method according to one of the preceding claims, **characterized in that** as an embossing element there is employed the movable mould part (10) of the injection moulding tool (M), an ejector or an embossing die in the injection moulding tool (M).

5. Method according to one of the preceding claims, **characterized in that** at the transition to the step of applying the clamping force a prompt termination of a simultaneous embossing sequence is enforced.

6. Method according to one of the preceding claims, **characterized in that** the ramp shape is calculated in real time as a mathematic functionality over time as a function parameter and over the start point associated with the actual state and over the end point associated with the setpoint value.

7. Method according to one of the preceding claims, **characterized in that** the serial embossing is introduced intermittently into the cycle sequence.

8. Method according to one of the preceding claims, **characterized in that** the embossing sequence is programmed as an independent primary sequence and the injection moulding sequence is programmed as a simultaneous, dependent secondary sequence.

9. Method according to one of the preceding claims, **characterized in that** a plurality of injection moulding units (I) are provided and the at least one embossing sequence per injection moulding unit that is not initiated by the injection moulding unit (I) is programmable.

10. Method according to one of the preceding claims, **characterized in that** the force (f) is controlled as a function of the die interior pressure.

## Revendications

1. Procédé de moulage par injection de pièces sur une machine de moulage par injection pour l'élaboration de matières plastiques et d'autres matériaux plastifiables comme des céramiques et/ou des masses pulvérulentes, ayant au moins une unité de moulage par injection (S), ce procédé comprenant les étapes suivantes :
- injection du matériau plastifié en tant que rembourrage de masse dans un évidement de moule (13) formé entre des pièces à mouler (10) d'un moule de moulage par injection (M)
- application d'une pression d'estampage ou d'un moyen d'estampage réglé(e) et non appliqué par l'unité de moulage par injection (I) sur le rembourrage de masse à l'aide d'au moins un organe d'estampage, l'application au moins une fois de la pression d'estampage et/ou du moyen d'estampage étant programmable librement en tant qu'opération d'estampage dans le déroulement du cycle,
- retrait ou éjection de la pièce moulée,
**caractérisé en ce qu'**un passage à la valeur de consigne se produit en tant que condition de force et/ou de liaison de moyen continue, à partir de l'état réel de la force (f) et/ou du moyen (s) de l'organe d'estampage, au début de l'étape d'estampage, à l'aide d'une rampe avec le paramètre de rampe de liaison.

2. Procédé selon la revendication 1, **caractérisé en ce qu'**au moins une opération d'estampage se produit en série et/ou simultanément avec le reste du déroulement de cycle.

3. Procédé selon la revendication 1 ou 2, **caractérisé en ce que** plusieurs opérations d'estampage sont prévues dans le déroulement de cycle.

4. Procédé selon l'une quelconque des revendications précédentes, **caractérisé en ce qu'**on utilise en tant qu'organe d'estampage dans le moule de moulage par injection (M), la partie de moule déplaçable (10) du moule de moulage par injection (M), un éjecteur ou un outil d'estampage.

5. Procédé selon l'une quelconque des revendications précédentes, **caractérisé en ce qu'**on obtient de force une interruption au bon moment d'une opération d'estampage simultanée lors du passage à l'étape d'application de la pression de bouchage.

6. Procédé selon l'une quelconque des revendications précédentes, **caractérisé en ce que** la forme de la rampe est calculée en temps réel en tant que fonction mathématique dans le temps, en tant que paramètre de fonction et à l'aide du point de départ associé à l'état réel et du point final associé à la valeur de consigne.

7. Procédé selon l'une quelconque des revendications précédentes, **caractérisé en ce que** des estampages en série sont insérés de façon intermittente dans le déroulement du cycle.

8. Procédé selon l'une quelconque des revendications précédentes, **caractérisé en ce que** l'opération d'estampage est programmée en tant que déroulement principal autonome et le cycle de moulage par injection en tant que sous-déroulement dépendant et simultané.

9. Procédé selon l'une quelconque des revendications précédentes, **caractérisé en ce que** plusieurs unités de moulage par injection (I) sont prévues et **en ce qu'**au moins une opération d'estampage qui n'est pas déclenchée par l'unité de moulage par injection est programmable pour chaque unité de moulage par injection.

10. Procédé selon l'une quelconque des revendications précédentes, **caractérisé en ce que** la force (f) est réglée en tant que fonction de la pression interne de l'outil.
